# EUROPEAN PATENT APPLICATION

(11) **EP 4 749 276 A1**
(43) Date of publication of application: **27.05.2026**
(21) Application number: 24845323.5
(22) Date of filing: 01.07.2024
(51) Int. Cl.: G01N 27/333

(54) **ELECTRODE BODY FOR ION SENSOR AND METHOD FOR MANUFACTURING ION SENSOR**

(30) Priority: 21.07.2023 JP 2023119237
(71) Applicant: HITACHI HIGH-TECH CORPORATION, Tokyo 105-6409 (JP)
(72) Inventor: IWASAWA Airi, Tokyo 105-6409 (JP); YAMAGUCHI Akihiro, Tokyo 100-8280 (JP); MIYAKE Masafumi, Tokyo 105-6409 (JP)
(74) Representative: Strehl & Partner mbB
(86) International application number: PCT/JP2024/023850
(87) International publication number: WO 2025/022941

(57) **Abstract**

An object of the present invention is to provide an ion sensor electrode unit with almost no performance failure by improving adhesive strength regardless of materials of an electrode body and an ion-sensitive membrane. According to the present invention, an ion sensor electrode unit includes: an internal electrode that outputs an electrical potential to an ion-sensitive membrane; and an electrode body containing an internal solution that electrically connects the internal electrode and the ion-sensitive membrane. The electrode body includes a flow passage through which liquid containing a sample to be measured flows, and a mounting surface on which the ion-sensitive membrane is mounted. The mounting surface and the ion-sensitive membrane are welded together via a compatibilizer.

## Description

### Technical Field

The present invention relates to an ion sensor electrode unit, and a method for manufacturing an ion sensor.

### Background Art

In each of analyzers such as a clinical analyzer, a water quality analyzer, a soil analyzer, and a food analyzer, an ion sensor that measures the concentration of an ionic electrolyte in a sample may be mounted. The ion sensor generally includes an electrode body, an internal solution, an ion-sensitive membrane, and an internal electrode. The electrode body of the flow-type ion sensor has a sample flow passage, and a through-hole is provided in a portion of a side surface of the sample flow passage. The through-hole is covered with the ion-sensitive membrane to form a response surface, and the electrode body and the ion-sensitive membrane are bonded together at a location other than the response surface.

However, variations in the electrode body and the ion-sensitive membrane weaken the adhesive strength between the electrode body and the ion-sensitive membrane, which may easily cause the response surface to peel off and result in poor performance. In the technique described in Patent Literature 1, water is applied to a mounting surface of the electrode body on which the ion-sensitive membrane is mounted, and the electrode body and the ion-sensitive membrane are welded together in a state in which the water is present on the mounting surface, thereby improving the adhesive strength between the electrode body and the ion-sensitive membrane.

### Citation List

### Patent Literature

Patent Literature 1: International Publication No. 2022/014095

### Summary of Invention

### Technical Problem

The technique described in Patent Literature 1 has a problem in that the adhesive strength cannot be improved unless the electrode body and the ion-sensitive membrane are made of organic polymers that are compatible with each other.

An object of the present invention is to provide an ion sensor electrode unit and a method for manufacturing an ion sensor with almost no performance failure by improving adhesive strength regardless of materials of an electrode body and an ion-sensitive membrane.

### Solution to Problem

To solve the problem described above, according to the present invention, there is provided an ion sensor electrode unit that includes an internal electrode that outputs an electrical potential to an ion-sensitive membrane, and an electrode body containing an internal solution that electrically connects the internal electrode and the ion-sensitive membrane, wherein the electrode body includes a flow passage through which liquid containing a sample to be measured flows, and a mounting surface on which the ion-sensitive membrane is mounted, and the mounting surface and the ion-sensitive membrane are welded together via a compatibilizer.

According to the present invention, there is provided a method for manufacturing an ion sensor in which an ion-sensitive membrane is fixed to an electrode unit containing an internal solution and having an internal electrode, the method including an application step of applying a compatibilizer onto a mounting surface of an electrode body on which the ion-sensitive membrane is mounted; a mounting step of mounting the ion-sensitive membrane in a state in which the compatibilizer is present on the mounting surface; and a welding step of welding the mounting surface and the ion-sensitive membrane together via the compatibilizer.

### Advantageous Effects of Invention

According to the present invention, it is possible to provide an ion sensor electrode unit and a method for manufacturing an ion sensor with almost no performance failure by improving adhesive strength regardless of materials of an electrode body and an ion-sensitive membrane.

### Brief Description of Drawings

Fig. 1 is a diagram illustrating an outline of a configuration of an ion sensor according to an embodiment of the present invention.
Fig. 2 is a flowchart illustrating a method for manufacturing the ion sensor according to the embodiment of the present invention.
Fig. 3 is a diagram illustrating an application step in step S1 illustrated in Fig. 2.
Fig. 4 is a diagram illustrating a mounting step in step S2 illustrated in Fig. 2.
Fig. 5 is a diagram illustrating a welding step in step S3 illustrated in Fig. 2.
Fig. 6 is a diagram illustrating an assembly step in step S4 illustrated in Fig. 2.
Fig. 7 is a diagram illustrating a state of opposing surfaces of an electrode body and an ion-sensitive membrane, (a) illustrating a case where water and a compatibilizer are not used as Comparative Example 1, (b) illustrating a case where water is used as Comparative Example 2, and (c) illustrating a compatibilizer is used as in the present embodiment.
Fig. 8 is a graph comparing adhesive strength between the electrode body and the ion-sensitive membrane when welding is performed using a crystalline compatibilizer with adhesive strength between the electrode body and the ion-sensitive membrane when welding is performed using an amorphous compatibilizer.

### Description of Embodiments

Hereinafter, embodiments of the present invention will be described with reference to the drawings.

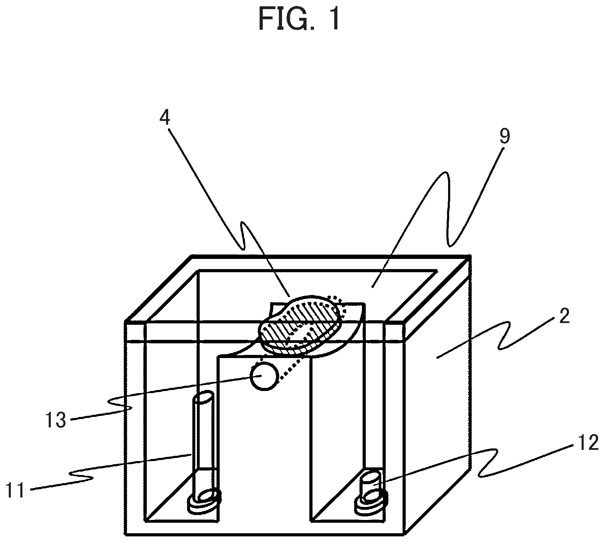

First, a configuration of an ion sensor according to the present embodiment will be described with reference to Fig. 1. Fig. 1 is a diagram illustrating an outline of a configuration of the ion sensor according to an embodiment of the present invention. The ion sensor mainly includes an ion sensor electrode unit and an ion-sensitive membrane 4. The ion sensor electrode unit includes an internal electrode 11 that outputs an electrical potential to the ion-sensitive membrane 4, an electrode body 2 containing an internal solution (not illustrated) that electrically connects the internal electrode 11 and the ion-sensitive membrane 4, an electrode body pin 12 for sealing to prevent the internal solution from leaking, and an electrode body plate 9 housing an internal container and serving as a bottom surface.

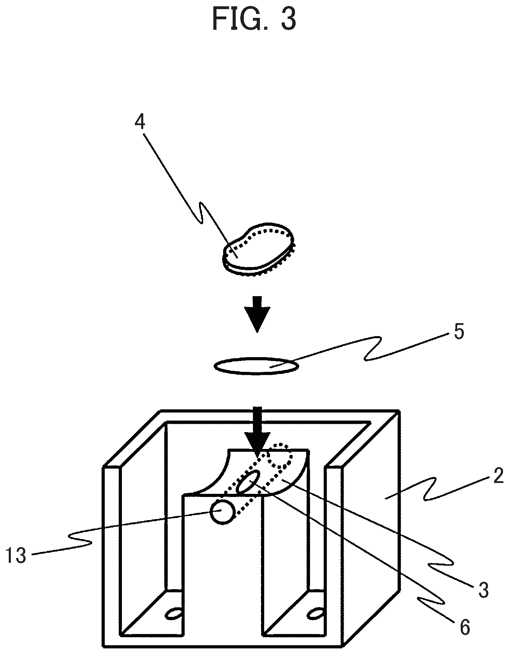

The electrode body 2 includes a sample flow passage 13 that is formed inside the electrode body and through which liquid containing a sample to be measured flows, and a mounting surface 3 (see Fig. 3 and the like described later) on which the ion-sensitive membrane 4 is mounted.

Although a wall surface of the electrode body 2 on the front side is not illustrated in Fig. 1 and the like, this is for clarity and the wall surface that is similar to a wall surface on the back side is actually provided. The electrode body 2 has a rectangular parallelepiped shape with external dimensions of approximately 11 mm × 20 mm × 24 mm, the sample flow passage 13 has a diameter of approximately 1 mm, and the mounting surface 3 has a size of approximately 5 mm × 5 mm. In a portion of the sample flow passage 13, an oval-shaped penetrating portion 6 (see Fig. 3 described later) that has a size of approximately 0.9 mm × 3 mm, is exposed to the mounting surface 3, and allows the sample to come into contact with the ion-sensitive membrane 4 is formed. In addition, the material of the entire electrode body 2 may be a thermoplastic resin or a hard resin containing a pigment. Alternatively, in addition to the electrode body made of a hard resin, a pigment is applied onto the mounting surface 3 of the electrode body 2.

Although not illustrated in Fig. 1, in the ion sensor according to the present embodiment, the mounting surface 3 of the electrode body 2 and the ion-sensitive membrane 4 are fixed to each other by welding via a compatibilizer. The compatibilizer will be described later in detail.

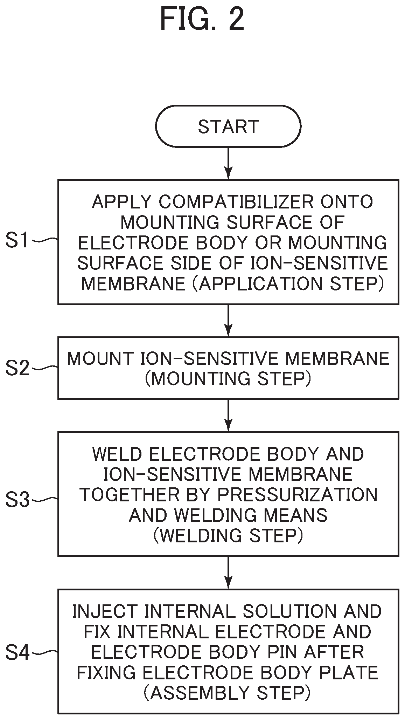

A method for manufacturing the ion sensor will be described with reference to Figs. 2 to 6. Fig. 2 is a flowchart illustrating the method for manufacturing the ion sensor. Figs. 3 to 6 are diagrams illustrating each step of the method for manufacturing the ion sensor.

First, an application step is performed in which a compatibilizer 5 is applied onto the mounting surface 3 of the electrode body 2 or the mounting surface side of the ion-sensitive membrane 4 (step S1). Fig. 3 is a diagram illustrating an application step in step S1 illustrated in Fig. 2. The compatibilizer 5 contains an amphiphilic composition that is soluble in both an organic polymer constituting the electrode body 2 and an organic polymer constituting the ion-sensitive membrane 4. The compatibilizer 5 applied onto the mounting surface 3 is held on the mounting surface 3 by surface tension, and therefore does not flow down from the penetrating portion 6 into the sample flow passage 13.

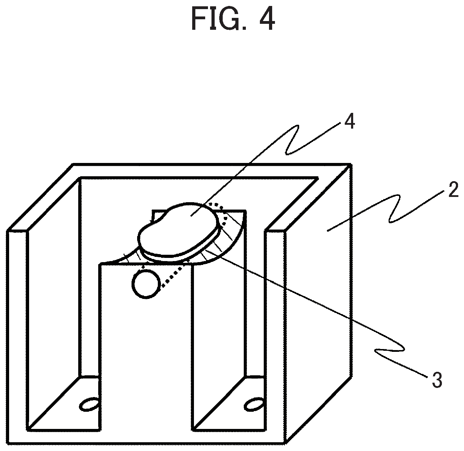

Next, in a state in which the compatibilizer 5 is present on the mounting surface 3 other than the penetrating portion 6 or on the mounting surface side of the ion-sensitive membrane 4 (before the compatibilizer 5 evaporates and disappears), a mounting step of mounting the ion-sensitive membrane 4 on the mounting surface 3 of the electrode body 2 from above is performed (step S2). Fig. 4 is a diagram illustrating a mounting step in step S2 illustrated in Fig. 2. The ion-sensitive membrane 4 is made of a soft or hard resin material having a diameter of 5 mm and a thickness of approximately 0.1 mm to 0.5 mm.

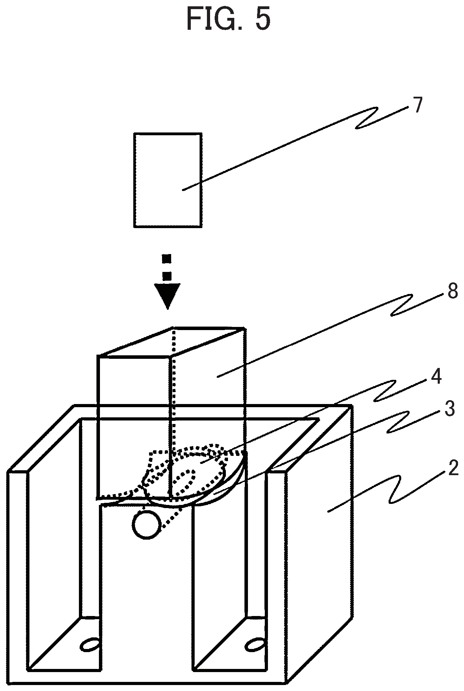

Thereafter, a welding step is performed in which the ion-sensitive membrane 4 is pressurized from the opposite side of the electrode body 2 and the electrode body 2 and the ion-sensitive membrane 4 are welded together using welding means 7 (step S3). Fig. 5 is a diagram illustrating a welding step in step S3 illustrated in Fig. 2. In the pressurization, a weight 8 is used, and the ion-sensitive membrane 4 is pressed by the weight 8 vertically against the mounting surface 3 of the electrode body 2 with the compatibilizer 5 sandwiched therebetween. By setting a force applied by the weight 8 to pressurize the entire ion-sensitive membrane 4 to approximately 10 N to 100 N, the adhesion between the electrode body 2, the compatibilizer 5 and the ion-sensitive membrane 4 is improved. The material of the weight 8 may be transparent glass such as quartz glass or ceramics. A lower end surface of the weight 8 that is on the side on which the weight comes into contact with the ion-sensitive membrane 4 has approximately the same size as that of the mounting surface 3 of the electrode body 2 and has a similar shape to that of the mounting surface 3. The force applied for the pressurization may be obtained not only by the gravity of the weight 8 itself but also by an external force of a servo motor or the like.

The welding means 7 will be described in detail. The welding means 7 may be an organic solvent, a laser irradiator, an ultrasonic irradiator, or the like. However, in the present embodiment, a case where the organic solvent is used and a case where the laser irradiator is used will be described as examples.

In a case where the organic solvent is used, the volatile organic solvent is applied onto the mounting surface 3 together with the compatibilizer 5 in the application step S1. Thereafter, in the welding step S3, the organic polymer constituting the electrode body 2 and the organic polymer constituting the ion-sensitive membrane 4 are dissolved in the organic solvent, and the welding is performed by applying stress toward a sensitive surface while evaporating the organic solvent.

In a case where the laser irradiator is used, in the welding step S3, laser light is radiated from above the ion-sensitive membrane 4 (on the side opposite to the electrode body 2) in a state in which the ion-sensitive membrane 4 is pressed against the mounting surface 3. The laser light is light with a wavelength in the far-infrared region emitted from the laser irradiator, which is the welding means 7. When the entire mounting surface 3 or the entire weight 8 is irradiated with the laser light, the energy of the laser light changes to thermal energy, and the mounting surface 3 melts due to heat generated. In addition, the irradiation with the laser light is performed while the pressurization with the weight 8 is continued, and the ion-sensitive membrane 4 is pressed against the mounting surface 3 in a molten state, making it easier for the mounting surface 3 and the ion-sensitive membrane 4 to be bonded to each other. Further, by performing the pressurization for approximately 1 second to 20 seconds after the end of the irradiation with the laser light, the adhesive strength between the mounting surface 3 near the penetrating portion 6 and the ion-sensitive membrane 4 is improved. It is desirable that at least the mounting surface 3 of the electrode body 2 be made of a material that is likely to generate thermal energy and has a melting point lower than that of the ion-sensitive membrane 4. The ion-sensitive membrane 4 transmits wavelengths in the far-infrared region and has a melting point higher than that of the electrode body 2 disposed on the mounting surface 3. For example, the material of the weight 8 may be transparent glass such as quartz glass or ceramics, but is not limited thereto as long as the material of the weight 8 transmits wavelengths in the far-infrared range.

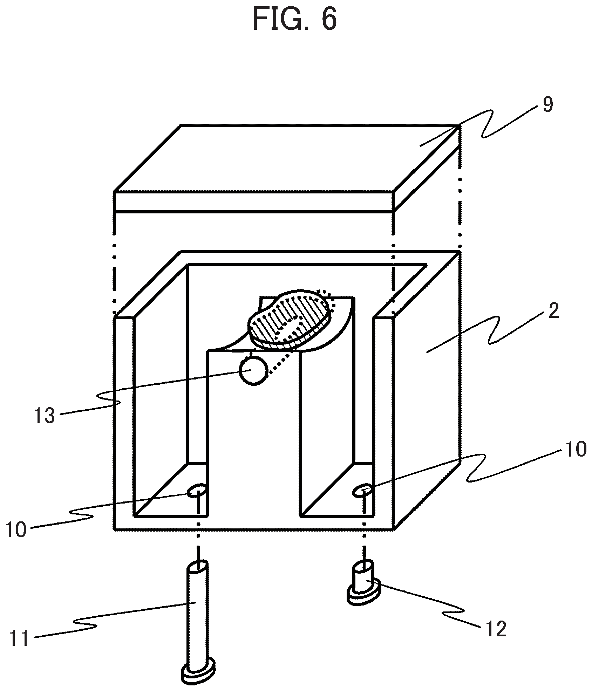

Next, when the welding step S3 is ended, the method proceeds to a final assembly step of assembling the ion sensor (step S4). Fig. 6 is a diagram illustrating the assembly step in step S4 illustrated in Fig. 2. In the assembly step, the electrode body plate 9 is fixed to the electrode body 2 with an adhesive, and the internal solution is filled through a hole 10. Further, the internal electrode 11 is inserted through the hole 10 and fixed to the electrode body 2 with an adhesive, and then the electrode body pin 12 is inserted through the hole 10 and fixed to the electrode body 2 with an adhesive. As a result, the manufacture of the ion sensor is completed.

An effect of the compatibilizer 5 in the ion sensor according to the present embodiment will be described below.

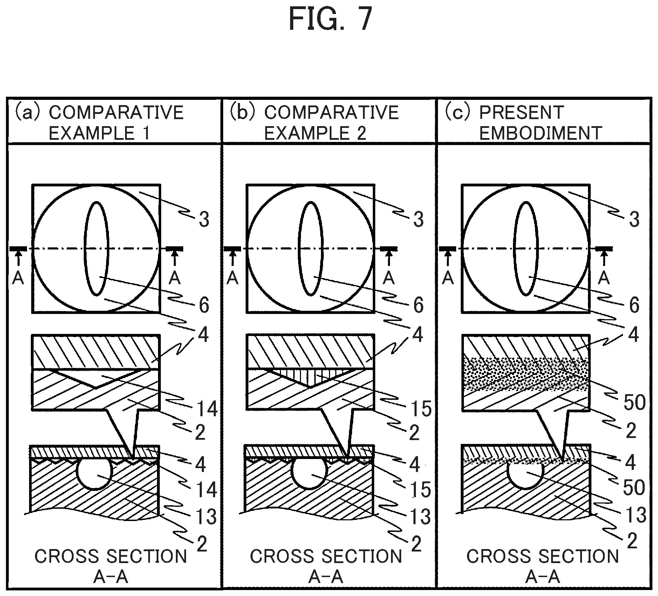

Fig. 7 is a diagram illustrating a state of opposing surfaces of the electrode body and the ion-sensitive membrane when the ion-sensitive membrane is pressurized with a weight, (a) illustrating a case where water and a compatibilizer are not used as Comparative Example 1, (b) illustrating a case where water is used as Comparative Example 2, and (c) illustrating a case where the compatibilizer is used as in the present embodiment. In this case, it is assumed that the laser irradiator is used as the welding means 7.

In Comparative Example 1 indicated by (a) in Fig. 7, a gap 14 is present between the electrode body 2 and the ion-sensitive membrane 4, and thus it is difficult for thermal energy to be uniformly transmitted between the electrode body 2 and the ion-sensitive membrane 4.

On the other hand, in the present embodiment indicated by (c) in Fig. 7, the gap 14 between the electrode body 2 and the ion-sensitive membrane 4 is filled with the compatibilizer 5, thermal energy is uniformly transmitted, and the organic polymer of the electrode body 2 on the mounting surface 3 and the organic polymer of the ion-sensitive membrane 4 melt. In this case, a mixed layer 50 in which the melted organic polymers and the compatibilizer 5 are mixed is formed between the electrode body 2 and the ion-sensitive membrane 4, and thus the adhesive strength between the electrode body 2 and the ion-sensitive membrane 4 is improved. As a result, according to the present embodiment, even if the material of the electrode body 2 varies, the adhesive strength between the electrode body 2 and the ion-sensitive membrane 4 is high, and thus it is possible to suppress performance failure due to peeling of a response surface, and to achieve stable quality and a high yield rate.

In Comparative Example 2 (Patent Literature 1) indicated by (b) in Fig. 7, the gap 14 between an electrode body 2 and the ion-sensitive membrane 4 is filled with water 15, thermal energy is uniformly transmitted, and an organic polymer of the electrode body 2 on the mounting surface 3 and an organic polymer of the ion-sensitive membrane 4 melt. In this case, the water 15 itself evaporates, but the adhesion strength between the electrode body 2 and the ion-sensitive membrane 4 is improved due to the welding of the organic polymers to each other. However, there is a problem that the adhesive strength cannot be improved unless the electrode body 2 and the ion-sensitive membrane 4 are made of organic polymers that are compatible with each other. For example, combinations of polyethylene (PE) and polyvinyl chloride (PVC), polypropylene (PP) and polyvinyl chloride (PVC), polyethylene (PE) and polypropylene (PP), polyethylene (PE) and polystyrene (PS), polystyrene (PS) and polyimide (PI), polystyrene (PS) and polymethylmethacrylate (PMMA), polystyrene (PS) and polybutylene (PB), polystyrene (PS) and polyethylene oxide (PEO), polystyrene (PS) and polycarbonate (PC), polymethylmethacrylate (PMMA) and polydimethylsiloxane (PDMS), polyurethane (PU) and polydimethylsiloxane (PDMS), and the like are combinations of organic polymers that are hardly compatible with each other. Therefore, in Comparative Example 2, in a case where the organic polymer constituting the electrode body 2 and the organic polymer constituting the ion-sensitive membrane 4 are a combination among these combinations (including reverse combinations of the combinations), it is difficult to weld the electrode body 2 and the ion-sensitive membrane 4 together and it is not possible to improve the adhesive strength.

On the other hand, in the present embodiment, by using the compatibilizer 5 suitable for the combination of the organic polymer constituting the electrode body 2 and the organic polymer constituting the ion-sensitive membrane 4, it is possible to weld the electrode body 2 (the mounting surface) and the ion-sensitive membrane 4 together. That is, it is possible to improve the adhesive strength and implement the ion sensor with almost no performance failure, without depending on the materials of the electrode body 2 and the ion-sensitive membrane 4. In addition, the inventors have confirmed that at least for the combinations listed above, the compatibilizer 5 for welding the electrode body 2 and the ion-sensitive membrane 4 together can be selected. For example, in a case where one of the electrode body 2 and the ion-sensitive membrane 4 is made of PE, and the other of the electrode body 2 and the ion-sensitive membrane 4 is made of PVC, chlorinated polyethylene is selected as the compatibilizer 5. In addition, in a case where one of the electrode body 2 and the ion-sensitive membrane 4 is made of PP, and the other of the electrode body 2 and the ion-sensitive membrane 4 is made of PVC, chlorinated polypropylene is selected as the compatibilizer 5.

The compatibilizer 5 is different from an adhesive that causes a chemical reaction between the electrode body 2 and the ion-sensitive membrane 4. The compatibilizer 5 assists in welding the electrode body 2 and the ion-sensitive membrane 4 together, and therefore the chemical structure of the compatibilizer 5 itself does not change before and after the welding step. In addition, the compatibilizer 5 remains as a portion of the ion sensor after the assembly step. However, the chemical structure of the compatibilizer 5 itself does not basically change except for a certain degree of degradation, and thus the compatibilizer 5 can maintain performance as the ion sensor. Further, it is desirable that the compatibilizer 5 have a melting point higher than the melting point of the organic polymer constituting the electrode body 2 and the melting point of the organic polymer constituting the ion-sensitive membrane 4. This is due to the fact that, when thermal energy is transmitted during the welding step, and the compatibilizer 5 melts before melting of the electrode body 2 and the ion-sensitive membrane 4, the effect of improving the adhesive strength between the electrode body 2 and the ion-sensitive membrane 4 is reduced.

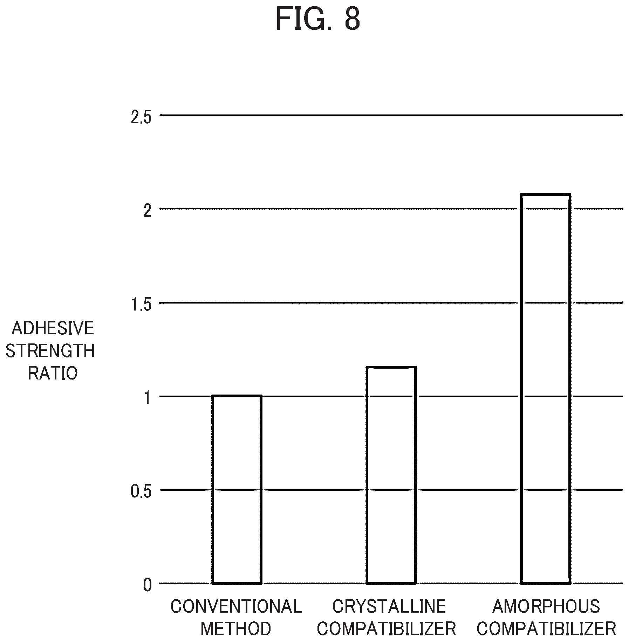

Fig. 8 is a graph comparing adhesive strength between the electrode body and the ion-sensitive membrane when welding is performed using a crystalline compatibilizer with adhesive strength between the electrode body and the ion-sensitive membrane when welding is performed using an amorphous compatibilizer.

In an ion sensor manufactured by a conventional method corresponding to the above-described Comparative Example 1, adhesive strength between the electrode body 2 and the ion-sensitive membrane 4 is set to 1. According to Fig. 8, it can be seen that the amorphous compatibilizer has adhesive strength higher than that of the crystalline compatibilizer. Further, the compatibilizer 5 is preferably non-ionic and does not affect the analytical performance of the ion sensor.

The embodiments described above have been described in detail to simply describe the present disclosure, and are not necessarily required to include all the described configurations. In addition, part of the configuration of the embodiments can be subjected to addition, deletion, and replacement with respect to other configurations.

### List of Reference Signs

2: electrode body, 3: mounting surface, 4: ion-sensitive membrane, 5: compatibilizer, 6: penetrating portion, 7: electrode body, 8: weight, 9: electrode body plate, 10: hole, 11: internal electrode, 12: electrode body pin, 13: sample flow passage, 14: gap, 15: water, 50: mixed layer

## Claims

1. An ion sensor electrode unit comprising:
an internal electrode that outputs an electrical potential to an ion-sensitive membrane; and
an electrode body containing an internal solution that electrically connects the internal electrode and the ion-sensitive membrane, wherein
the electrode body includes a flow passage through which liquid containing a sample to be measured flows, and a mounting surface on which the ion-sensitive membrane is mounted, and
the mounting surface and the ion-sensitive membrane are welded together via a compatibilizer.

2. The ion sensor electrode unit according to claim 1, wherein
the compatibilizer is amorphous.

3. The ion sensor electrode unit according to claim 1, wherein
the compatibilizer is non-ionic.

4. The ion sensor electrode unit according to claim 1, wherein
the compatibilizer has a melting point higher than a melting point of an organic polymer constituting the electrode body and a melting point of an organic polymer constituting the ion-sensitive membrane.

5. The ion sensor electrode unit according to claim 1, wherein
a layer in which an organic polymer constituting the electrode body, an organic polymer constituting the ion-sensitive membrane, and the compatibilizer are mixed is formed between the mounting surface and the ion-sensitive membrane.

6. The ion sensor electrode unit according to claim 1, wherein
a combination of an organic polymer constituting the electrode body and an organic polymer constituting the ion-sensitive membrane is any of combinations of polyethylene and polyvinyl chloride, polypropylene and polyvinyl chloride, polyethylene and polypropylene, polyethylene and polystyrene, polystyrene and polyimide, polystyrene and polymethylmethacrylate, polystyrene and polybutylene, polystyrene and polyethylene oxide, polystyrene and polycarbonate, polymethylmethacrylate and polydimethylsiloxane, polyurethane and polydimethylsiloxane, and reverse combinations of the combinations.

7. The ion sensor electrode unit according to claim 1, wherein
one of the electrode body and the ion-sensitive membrane is made of polyethylene, and the other of the electrode body and the ion-sensitive membrane is made of polyvinyl chloride, and
the compatibilizer is chlorinated polyethylene.

8. The ion sensor electrode unit according to claim 1, wherein
one of the electrode body and the ion-sensitive membrane is made of polypropylene, and the other of the electrode body and the ion-sensitive membrane is made of polyvinyl chloride, and
the compatibilizer is chlorinated polypropylene.

9. A method for manufacturing an ion sensor in which an ion-sensitive membrane is fixed to an electrode unit containing an internal solution and having an internal electrode, the method comprising:
an application step of applying a compatibilizer onto a mounting surface of an electrode body on which the ion-sensitive membrane is mounted;
a mounting step of mounting the ion-sensitive membrane in a state in which the compatibilizer is present on the mounting surface; and
a welding step of welding the mounting surface and the ion-sensitive membrane together via the compatibilizer.

10. The method for manufacturing an ion sensor according to claim 9, wherein
a chemical structure of the compatibilizer does not change before and after the welding step.

## Amended claims

### Amended claims under Art. 19.1 PCT

1. An ion sensor electrode unit comprising:
an internal electrode that outputs an electrical potential to an ion-sensitive membrane; and
an electrode body containing an internal solution that electrically connects the internal electrode and the ion-sensitive membrane, wherein
the electrode body includes a flow passage through which liquid containing a sample to be measured flows, and a mounting surface on which the ion-sensitive membrane is mounted,
the mounting surface and the ion-sensitive membrane are welded together via a compatibilizer, and
the compatibilizer has a melting point higher than a melting point of an organic polymer constituting the electrode body and a melting point of an organic polymer constituting the ion-sensitive membrane.

2. The ion sensor electrode unit according to claim 1, wherein
the compatibilizer is amorphous.

3. The ion sensor electrode unit according to claim 1, wherein
the compatibilizer is non-ionic.

4. (Deleted)

5. The ion sensor electrode unit according to claim 1, wherein
a layer in which an organic polymer constituting the electrode body, an organic polymer constituting the ion-sensitive membrane, and the compatibilizer are mixed is formed between the mounting surface and the ion-sensitive membrane.

6. The ion sensor electrode unit according to claim 1, wherein
a combination of an organic polymer constituting the electrode body and an organic polymer constituting the ion-sensitive membrane is any of combinations of polyethylene and polyvinyl chloride, polypropylene and polyvinyl chloride, polyethylene and polypropylene, polyethylene and polystyrene, polystyrene and polyimide, polystyrene and polymethylmethacrylate, polystyrene and polybutylene, polystyrene and polyethylene oxide, polystyrene and polycarbonate, polymethylmethacrylate and polydimethylsiloxane, polyurethane and polydimethylsiloxane, and reverse combinations of the combinations.

7. The ion sensor electrode unit according to claim 1, wherein
one of the electrode body and the ion-sensitive membrane is made of polyethylene, and the other of the electrode body and the ion-sensitive membrane is made of polyvinyl chloride, and
the compatibilizer is chlorinated polyethylene.

8. The ion sensor electrode unit according to claim 1, wherein
one of the electrode body and the ion-sensitive membrane is made of polypropylene, and the other of the electrode body and the ion-sensitive membrane is made of polyvinyl chloride, and
the compatibilizer is chlorinated polypropylene.

9. A method for manufacturing an ion sensor in which an ion-sensitive membrane is fixed to an electrode unit containing an internal solution and having an internal electrode, the method comprising:
an application step of applying, onto a mounting surface of an electrode body on which the ion-sensitive membrane is mounted, a compatibilizer having a melting point higher than a melting point of an organic polymer constituting the electrode body and a melting point of an organic polymer constituting the ion-sensitive membrane;
a mounting step of mounting the ion-sensitive membrane in a state in which the compatibilizer is present on the mounting surface; and
a welding step of welding the mounting surface and the ion-sensitive membrane together via the compatibilizer.

10. The method for manufacturing an ion sensor according to claim 9, wherein
a chemical structure of the compatibilizer does not change before and after the welding step.

Statement under Art. 19.1 PCT
1. The corrected claim 1 adds the description of claim 4 before correction to claim 1 before correction.

2. Claim 4 is deleted.

3. The corrected claim 9 adds the description of claim 4 before correction to claim 9 before correction.
